(19) Europäisches Patentamt
European Patent Office
Office européen des brevets

(11) **EP 3 141 014 B1**

(12) **EUROPÄISCHE PATENTSCHRIFT**

(45) Veröffentlichungstag und Bekanntmachung des Hinweises auf die Patenterteilung:
**25.12.2019 Patentblatt 2019/52**

(21) Anmeldenummer: **15741910.2**

(22) Anmeldetag: **02.04.2015**

(51) Int Cl.:
*H04W 24/00* (2009.01)    *H04B 17/373* (2015.01)
*H04L 12/26* (2006.01)    *H04L 29/08* (2006.01)
*H04L 12/24* (2006.01)    *H04B 17/23* (2015.01)
*H04W 84/18* (2009.01)

(86) Internationale Anmeldenummer:
**PCT/EP2015/057318**

(87) Internationale Veröffentlichungsnummer:
**WO 2015/169516 (12.11.2015 Gazette 2015/45)**

(54) **VERFAHREN UND VORRICHTUNG ZUR SCHÄTZUNG EINER ZU ERWARTENDEN EMPFANGSQUALITÄT**

METHOD AND APPARATUS FOR ESTIMATING AN EXPECTED RECEPTION QUALITY

PROCÉDÉ ET DISPOSITIF D'ESTIMATION D'UNE QUALITÉ DE RÉCEPTION ATTENDUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.05.2014 DE 102014208500**

(43) Veröffentlichungstag der Anmeldung:
**15.03.2017 Patentblatt 2017/11**

(73) Patentinhaber: **Volkswagen Aktiengesellschaft 38440 Wolfsburg (DE)**

(72) Erfinder:
• **AYMELEC, Tetiana Dr.**
  **74321 Bietigheim-Bissingen (DE)**
• **MEIER, Jan-Niklas**
  **38440 Wolfsburg (DE)**
• **SIMSEK, Burak**
  **38112 Braunschweig (DE)**

(56) Entgegenhaltungen:
EP-A1- 0 986 282    EP-A1- 2 487 665
WO-A1-2009/067215    DE-A1-102009 054 795
US-A1- 2011 205 943

• GIETELINK O J ET AL: "A probabilistic approach for validation of advanced driver assistance systems", TRANSPORTATION RESEARCH RECORD, TRANSPORTATION RESEARCH BOARD, WASHINGTON, DC, US, Nr. Technical report 04-016, 1. November 2004 (2004-11-01), Seiten 1-18, XP007911731, ISSN: 0361-1981
• MORITZ KILLAT ET AL: "An Empirical Model for Probability of Packet Reception in Vehicular Ad Hoc Networks", EURASIP JOURNAL ON WIRELESS COMMUNICATIONS AND NETWORKING, Bd. 2009, 1. Januar 2009 (2009-01-01), Seiten 1-12, XP055207466, ISSN: 1687-1472, DOI: 10.1524/itit.2008.0489

**Beschreibung**

Die Erfindung betrifft ein Verfahren und eine Vorrichtung zur Schätzung einer zu erwartenden Empfangsqualität in einem Zeitintervall für eine Car to X (C2X)-Kommunikation.

Verkehrsunfälle und Straßenstaus sind erhebliche Probleme bei einer Fahrzeugfahrt. Fahrzeugadhoc-Netz-basierte Systeme einer aktiven Steuerung und Fahrerunterstützung ermöglichen einem drahtlosen Nahbereichsfahrzeugkommunikationssystem, wie beispielsweise einem System einer dedizierten Nahbereichskommunikation (DSRC von dedicated short range communication) oder einem WiFi-basierten drahtlosen Kommunikationssystem, die Fachleuten bekannt sind, Nachrichten zu anderen Fahrzeugen zu übertragen. DSRC oder WiFi können verwendet werden, um drahtlose Fahrzeugmerkmale, die den Fahrerkomfort und die Fahrbahneffizienz verbessern können und viele Typen von fahrzeuginternen Diensten ermöglichen können, zu realisieren. Die DSRC-Technologie ermöglicht eine neue Klasse von Fahrzeugmerkmalen auf der Grundlage einer Kommunikation mit anderen Fahrzeugen (Car to Car bzw. C2C) oder der Infrastruktur (Car to Infrastructure bzw. C2I). Allgemein kann der Begriff (Car to X bzw. C2X) verwendet werden, um die verschiedenen Typen von Kommunikationsanwendungen zu bezeichnen, die durch DSRC und WiFi in Fahrzeugumgebungen ermöglicht werden.

Aus der DE 20 2011 011 487 A1 ist ein Verfahren zum Optimieren von Daten, die zwischen Fahrzeugen transferiert werden, bekannt. Dabei wird ermittelt, ob es verlorene Pakete in einer Sequenz von Statusnachrichten gibt, die zwischen zwei Fahrzeugen übertragen werden. Es wird ermittelt, ob eine Anzahl an erfolgreichen Pakettransfers größer oder gleich einem Schwellenwert für erfolgreiche Pakete ist und ob sich eine Angabe der empfangenen Signalstärke erhöht, wenn es keine verlorenen Pakete in der Sequenz von Nachrichten gibt. Es wird ermittelt, ob eine Anzahl an verlorenen Pakettransfers größer oder gleich einem Schwellenwert für verlorene Pakete ist und ob sich eine Angabe der empfangenen Signalstärke verringert, wenn es keine verlorenen Pakete in der Sequenz von Nachrichten gibt. Es wird ermittelt, ob eine Anzahl an verlorenen Pakettransfers größer oder gleich dem Schwellenwert für erfolgreiche Pakete ist und wenn sich die Angabe der empfangenen Signalstärke erhöht. Die Länge des Nachrichtenpakets wird um einen vorbestimmten Paketverringerungsumfang verringert, wenn die Anzahl an verlorenen Pakettransfers größer oder gleich dem Schwellenwert für erfolgreiche Pakete ist und wenn sich die Angabe der empfangenen Signalstärke verringert.

Ein ähnliches Verfahren ist aus der US 7,355,997 B2 bekannt.

Aus Gietelink O. J. et al.: "A probabilistic approach for validation of advanced driver assistance systems", Transportation Research Record, Transportation Research Board, Washington, DC. US, Nr. Technical report 04-016, 1. November 2004 (2004-11-01), Seiten 1-18, XP007911731, ISSN: 0361-1981 ist ein Verfahren bekannt, das zur Validierung von Fahrerassistenzsystemen eine empirisch bestimmte Wahrscheinlichkeit verwendet, die sich aus dem Mittelwert von N unabhängigen und gleichverteilten Experimenten einer Indikatorfunktion berechnet, um beispielsweise Kollisionswahrscheinlichkeiten zu bestimmen.

Aus der DE 10 2009 054 795 A1 ist ein Kommunikationssystem für ein Fahrzeug bekannt, das ein mobiles Kommunikationsmodul aufweist, wobei das Kommunikationssystem zum Senden von Fahrzeug-zu-X-Botschaften an ein benachbartes Fahrzeug oder zum Empfangen von Fahrzeug-zu-X-Botschaften von einem benachbarten Fahrzeug ausgeführt ist, wobei zumindest ein Teil des mobilen Kommunikationsmoduls zum Beitragen an der Bereitstellung der Kommunikation mit dem benachbarten Fahrzeug vorgesehen ist. Dabei ist weiter vorgesehen, dass das mobile Kommunikationsmodul zur Bestimmung einer Position des Fahrzeugs ausgeführt ist, wobei das Kommunikationssystem zur Integration der von dem mobilen Kommunikationsmodul bestimmten Position in die zu sendenden Botschaften ausgeführt ist und/oder dass das Kommunikationssystem zur Verifizierung einer von dem Fahrzeug bestimmten Position auf Basis der von dem mobilen Kommunikationsmodul bestimmten Position ausgeführt ist.

Nachteilig ist, dass diese Verfahren erst auf eine verschlechterte Empfangssituation reagieren. Insbesondere im Falle, wo die C2X Nachrichten zur Unterstützung einer Assistenz-Funktion in einem Kraftfahrzeug dienen, wird dann der Nutzer gegebenenfalls überrascht, wenn die Assistenz-Funktion aufgrund der verschlechterten Empfangssituation nur eingeschränkt funktionsfähig ist.

Der Erfindung liegt das technische Problem zugrunde, ein Verfahren bereitzustellen sowie eine Vorrichtung zu schaffen, mittels derer eine zu erwartende Empfangsqualität geschätzt werden kann.

Die Erfindung wird in den angehängten Ansprüchen definiert.

Das Verfahren zur Schätzung einer zu erwartenden Empfangsqualität in einem Zeitintervall für Car to X (C2X)-Kommunikation erfolgt mittels eines Speichers. In dem Speicher ist mindestens eine empirisch ermittelte Größe zu Empfangsmustern von Datenpaketen in einem ersten Zeitintervall abgelegt, wobei die Größe angibt oder aus der Größe ermittelbar ist, wie groß die Wahrscheinlichkeit ist, dass in einem nachfolgenden zweiten Zeitintervall ein Datenpaket oder n Datenpakete erfolgreich empfangen werden. Die Empfangsmuster sind dabei vorzugsweise binäre Muster, die beispielsweise eine logische 1 für ein erfolgreich empfangenes Datenpaket aufweisen und eine logische 0 für ein nicht erfolgreich empfangenes Datenpaket aufweisen. Die Länge des ersten Zeitintervalls, des zweiten Zeitintervalls und der Größe n sind dabei freiparametrierbar. Allerdings gilt, dass vorzugsweise das erste Zeitintervall länger als das zweite Zeitintervall ist. Des Weiteren wird n in Abhängigkeit der Länge des zweiten Zeitintervalls gewählt. Dabei ist n eine natürliche Zahl und kann daher auch 1 sein. Der Grundgedanke der Erfindung ist dabei, dass zumindest eine gewisse Korrelation zwischen einem Empfangsmuster im ersten Zeitintervall mit einem Empfangsmuster im zweiten Zeitintervall vorliegt, sodass das erste Zeitintervall Rückschlüsse auf das zweite Zeitintervall erlaubt.

Die Datenbasis in dem Speicher wird hierzu empirisch in einer Vorstufe ermittelt. Existiert dann eine Datenbasis, die vorzugsweise zu jedem oder sehr vielen Empfangsmuster eine Größe hat, kann das eigentliche Verfahren beginnen. Für Empfangsmuster, wo noch keine Größe existiert, kann dabei vorgesehen sein, dass ein geeigneter Mittelwert (Median oder arithmetischer Mittelwert) für die Größe angesetzt wird. Weiter kann vorgesehen sein, dass die Empfangsgüte des Musters selbst herangezogen wird. So werden beispielsweise die logischen 1en ins Verhältnis zur Bitzahl des Empfangsmusters gesetzt. Ein Empfangsmuster 0100 hätte dann eine Empfangswahrscheinlichkeit von 25 %.

Soll nun die Empfangsqualität für ein zukünftiges Zeitintervall mit der Länge der zweiten Zeitintervalle geschätzt werden, so wird für ein erstes Zeitintervall vor dem zukünftigen Zeitintervall das Empfangsmuster bestimmt. Aus dem Speicher wird dann die zugehörige Größe für die Wahrscheinlichkeit für das Zeitintervall aufgrund des vorangegangenen Empfangsmusters ausgelesen, wobei in Abhängigkeit der Wahrscheinlichkeit eine Warnmeldung generiert wird und/oder ein Übertragungsparameter und/oder eine Funktionalität einer Fahrerassistenzfunktion verändert wird. Beispielsweise kann einer sendenden Infrastruktur oder einem sendenden Fahrzeug mitgeteilt werden, dass die Sendeleistung erhöht und/oder eine Sendefrequenz verändert wird (z.B. erhöht wird) oder eine Paketlänge reduziert werden soll. Die Änderung der Funktionalität einer Fahrerassistenzfunktion kann beispielsweise darin bestehen, dass diese nur mit eingeschränktem Leistungsumfang oder im Extremfall gar nicht angeboten wird. Durch die Schätzung der zu erwartenden Empfangsqualität wird der Nutzer (Fahrer) frühzeitig auf gegebenenfalls zu erwartende Einschränkungen aufgrund der mangelnden Empfangsqualität hingewiesen, sodass dieser sich entsprechend darauf einstellen kann. Ein Schwellwert für die Wahrscheinlichkeit, bei deren Unterschreitung eine Warnmeldung generiert wird, kann dabei abhängig von der Anwendung gewählt werden.

In einer Ausführungsform werden die Anzahl der erfolgreich empfangenen Datenpakete und/oder nicht erfolgreich empfangenen Datenpakete in dem Zeitintervall erfasst, wobei die Wahrscheinlichkeit für das Empfangsmuster in dem Speicher aufgrund der erfassten Empfangsqualität aktualisiert wird. D.h. die Datenbasis wird fortlaufend aktualisiert und ist quasi selbstlernend. Hierdurch findet automatisch eine Anpassung an sich ändernde Umstände statt, beispielsweise wenn der Fahrer nach längerer Zeit von Fahrten auf Landstraßen auf Autobahnfahrt wechselt und umgekehrt.

In einer Ausführungsform existieren in dem Speicher zu jedem Empfangsmuster zwei Zählerstände, wobei der eine Zählerstand inkrementiert wird, wenn n oder mehr Datenpakete im Zeitintervall erfolgreich empfangen wurden und der andere Zählerstand inkrementiert wird, wenn weniger als n Datenpakete im Zeitintervall erfolgreich empfangen wurden. Dies stellt eine qualitative Bewertung dar. Beispielsweise hat das Zeitintervall eine Länge, um fünf Datenpakete zu empfangen, wobei n = 3 sei. Dann wird bei 3, 4 oder 5 erfolgreich empfangenen Datenpaketen der eine Zähler inkrementiert. D.h. die Zählerstände bzw. deren Verhältnis zueinander geben die Wahrscheinlichkeit an, ob n oder mehr Datenpakete erfolgreich empfangen werden. Dabei sei angemerkt, dass es auch möglich ist, mit einem Zähler zu arbeiten, der inkrementiert und dekrementiert wird, solange nur Überläufe beobachtet werden. Alternativ kann die Inkrementierung auch qualitativ erfolgen, indem der eine Zähler entsprechend der Anzahl der erfolgreich empfangenen Datenpakete im Zeitintervall inkrementiert wird und entsprechend der andere Zähler entsprechend der Anzahl nicht erfolgreich empfangener Datenpakete inkrementiert wird. Dabei sei angemerkt, dass in vorgegebenen Zeitabständen der Speicher bzw. der oder die Zählerstände gelöscht bzw. zurückgesetzt werden können. Die vorgegebene Zeit ist dabei vorzugsweise freiparametrierbar.

In einer Ausführungsform ist das erste Zeitintervall ein Vielfaches größer als das zweite Zeitintervall, was bezüglich der Korrelation von Vorteil ist.

In einer weiteren Ausführungsform ist in dem Speicher für die Empfangsmuster in Abhängigkeit von mindestens einem Parameter eine verschiedene Größe der Wahrscheinlichkeit abgelegt, wobei die zugehörige Größe oder Wahrscheinlichkeit automatisch in Abhängigkeit des Parameters ausgewählt wird oder der Parameter manuell ausgewählt wird. Der oder die Parameter können beispielsweise Umgebungsparameter wie Stadt, Autobahn, Waldgebiete oder auch Wochentage sein, die einen Einfluss auf die Empfangsqualität haben können. Dies erlaubt eine noch bessere Schätzung der zu erwartenden Empfangsqualität. Die automatische Erkennung des Parameters kann beispielsweise mittels Navigationsdaten oder Daten eines Bordcomputers erfolgen.

Die Vorrichtung zur Schätzung einer zu erwartenden Empfangsqualität in einem Zeitintervall für C2X-Kommunikation umfasst eine Empfangseinrichtung zur Erfassung von Datenpaketen und einen Speicher. In dem Speicher ist zu Empfangsmustern von Datenpaketen in einem ersten Zeitintervall mindestens eine empirisch ermittelte Größe abgelegt, die angibt oder aus der ermittelbar ist, wie groß die Wahrscheinlichkeit ist, dass in einem nachfolgenden zweiten Zeitintervall ein Datenpaket oder n Datenpakete erfolgreich empfangen werden. Die Vorrichtung ist dabei derart ausgebildet, dass für ein erstes Zeitintervall vor dem Zeitintervall das Empfangsmuster bestimmt und die zugehörige Wahrscheinlichkeit für das Zeitintervall aus dem Speicher ausgelesen wird, wobei in Abhängigkeit der Wahrscheinlichkeit eine Warnmeldung generiert und/oder ein Übertragungsparameter und/oder eine Funktionalität einer Fahrerassistenzfunktion verändert wird. Hinsichtlich der weiteren vorteilhaften Ausgestaltungen der Vorrichtung wird auf die vorangegangenen Ausführungen zum Verfahren vollinhaltlich Bezug genommen.

Die Erfindung wird nachfolgend anhand eines bevorzugten Ausführungsbeispiels näher erläutert. Die Figuren zeigen:

Fig. 1 ein schematisches Blockschaltbild einer Vorrichtung zur Schätzung einer zu erwartenden Empfangsqualität,

Fig. 2 eine schematische Darstellung eines Empfangsmusters,

Fig. 3 eine schematische Teilansicht einer Lookup-Tabelle nach einem Lernmodus und

Fig. 4 eine schematische Darstellung des Ablaufs zur Schätzung einer zu erwartenden Empfangsqualität.

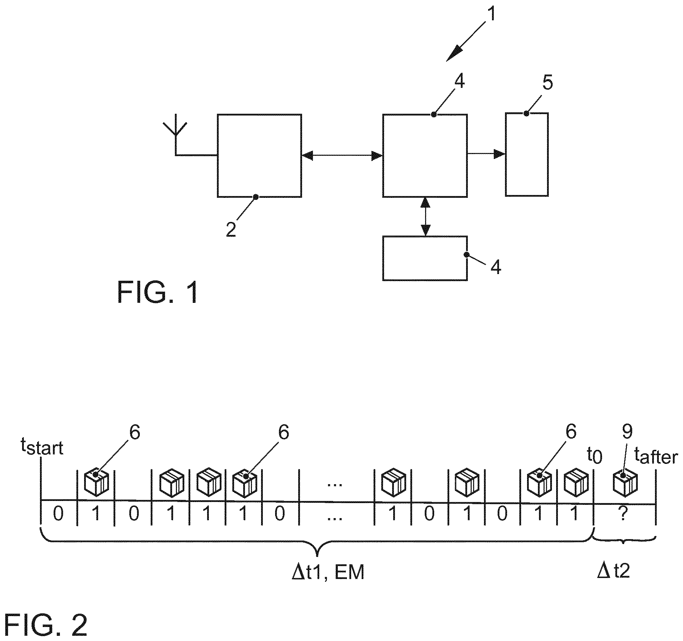

In der Fig. 1 ist ein Blockschaltbild einer Vorrichtung 1 zur Schätzung einer zu erwartenden Empfangsqualität in einem Zeitintervall für C2X-Kommunikation dargestellt, die eine Empfangseinrichtung 2, eine Steuereinheit 3, einen Speicher 4 und eine Anzeigeeinheit 5 aufweist. Die Empfangseinrichtung 2 ist dabei typischerweise als Sende- und Empfangseinrichtung ausgebildet, wobei hier jedoch nur die Empfangseinrichtung 2 von Interesse ist. Die empfangenen und nicht empfangenen Datenpakete 6 (siehe Fig. 2) werden an die Steuereinheit 3 übermittelt, wo diese ausgewertet werden und Anwendungen zur Verfügung gestellt werden. Dabei kann die Steuereinheit 3 mit Hilfe der in dem Speicher 4 abgelegten Größen für Empfangsmuster EM (siehe Fig. 2) die zu erwartende Empfangsqualität schätzen. Unterschreitet dann die geschätzte Empfangsqualität einen Schwellwert, so wird auf der Anzeigeeinheit 5 eine Warnmeldung angezeigt. Dabei sind alternativ oder zusätzlich weitere Warnformen wie akustisch und/oder haptisch möglich. Alternativ oder zusätzlich kann eine Funktionalität einer Fahrerassistenzfunktion verändert werden, beispielsweise deren Funktionsumfang beschränkt werden.

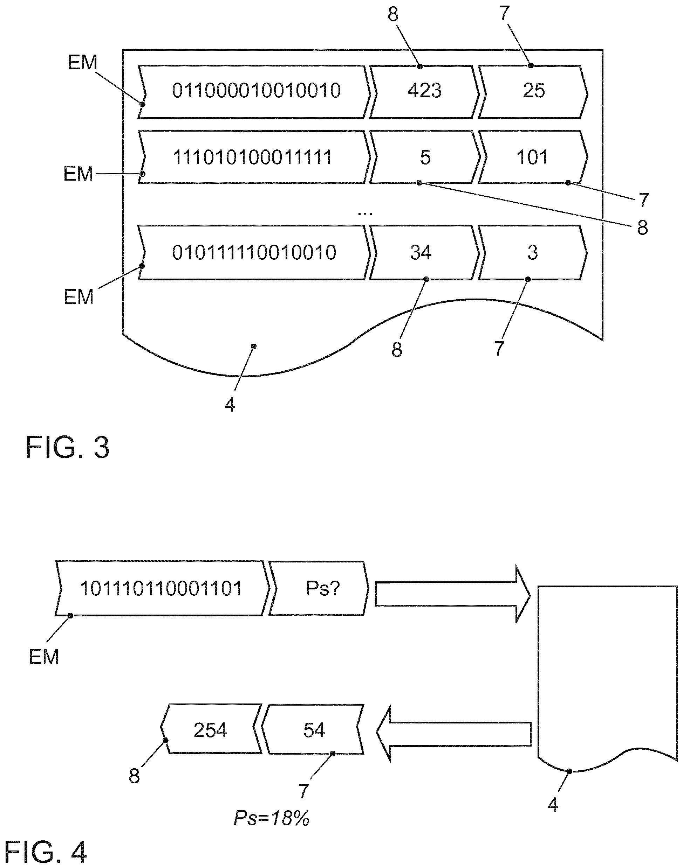

Zunächst soll der Inhalt des Speichers anhand der Fig. 2 und 3 näher erläutert werden. In Fig. 2 ist ein Empfangsmuster EM für ein erstes Zeitintervall $\Delta t1 = t_0 - t_{start}$ dargestellt, wie es beispielsweise von der Empfangseinrichtung 2 empfangen wird. Abhängig von der Sendefrequenz wird dann das erste Zeitintervall $\Delta t1$ in Zeitschlitze unterteilt und geschaut, ob in dem Zeitschlitz ein Datenpaket 6 empfangen wird oder nicht. Das Empfangsmuster EM ist ein binäres Muster mit einer logischen 1, wenn ein Datenpaket 6 erfolgreich empfangen wurde, und einer logischen 0, wenn ein Datenpaket 6 nicht erfolgreich empfangen wurde. Zur Veranschaulichung sind oberhalb der logischen 1 en piktogrammförmige Datenpakete 6 dargestellt. Die Vorrichtung soll nun schätzen, wie die zu erwartende Empfangsqualität in einem nachfolgenden zweiten Zeitintervall $\Delta t2 = t_{after} - t_0$ für Datenpakete 9 ist.

Hierzu wird in einem Lernmodus zunächst eine Datenbasis angelegt, wobei hierzu beispielsweise folgende Möglichkeiten bestehen:
Zu jedem Empfangsmuster EM in einem ersten Zeitintervall $\Delta t1$ werden die Datenpakete 9 im zweiten Zeitintervall $\Delta t2$ ausgewertet. Dabei existieren zwei Zählerstände 7, 8 (siehe Fig. 3 und 4), wobei der eine Zählerstand 7 bei jedem erfolgreich empfangenen Datenpaket 9 inkrementiert wird und der andere Zählerstand 8 bei jedem nicht empfangenen Datenpaket 9 inkrementiert wird. Ist beispielsweise das zweite Zeitintervall $\Delta t2$ so lang, dass theoretisch sechs Datenpakete 9 empfangen werden könnten und werden vier Datenpakete 9 empfangen und zwei Datenpakete 9 nicht empfangen, so wird der eine Zählerstand 7 vier und der andere Zählerstand 8 um zwei erhöht. Mit der Zeit liegen dann Zählerstände 7, 8 für immer mehr verschiedene Empfangsmuster EM vor und die Zählerstände 7, 8 der Empfangsmuster EM erhöhen sich kontinuierlich, bis eine ausreichende Datenbasis vorliegt. In der Fig. 3 ist dies nun schematisch für einen Teil der Empfangsmuster EM dargestellt, die beispielsweise als Lookup-Tabelle abgelegt sind.

Das Empfangsmuster EM "010111110010010" hat dabei für den einen Zählerstand 7 eine "3" und für den anderen Zählerstand 8 eine "34", d.h. dass in vorangegangenen Messungen mit einem Empfangsmuster EM "010111110010010" in dem ersten Zeitintervall $\Delta t1$ in den nachfolgenden zweiten Zeitintervallen $\Delta t2$ insgesamt 3 Datenpakete 9 erfolgreich empfangen wurden und 34 Datenpakete 9 nicht empfangen wurden. Anhand dieser Zählerstände 7, 8 kann dann eine zu erwartende Empfangsqualität in einem Zeitintervall (mit der Länge des zweiten Zeitintervalls $\Delta t2$) geschätzt werden, was später anhand von Fig. 4 noch erläutert wird.

Alternativ kann die Datenbasis wie folgt aufgebaut werden. Wieder existiert ein Zählerstand 7 für erfolgreiche und ein anderer Zählerstand 8 für nicht erfolgreiche Datenpakete 9. Der Unterschied ist, dass vorab festgelegt wird, dass bei n oder mehr erfolgreichen Datenpaketen 9 im zweiten Zeitintervall $\Delta t2$ der eine Zählerstand 7 inkrementiert und bei weniger als n erfolgreichen Datenpaketen 9 der andere Zählerstand 8 inkrementiert wird.

In der Fig. 4 ist nun schematisch der Vorgang der Schätzung der Empfangsqualität in einem Zeitintervall dargestellt, wobei in einem vorangegangenen ersten Zeitintervall $\Delta t1$ ein Empfangsmuster EM "101110110001101" empfangen wurde. Die geschätzte Empfangsqualität kann auch als (Erfolgs)-Wahrscheinlichkeit $P_S$ (success probability) ausgedrückt werden. Hierzu werden die Zählerstände 7 und 8 aus dem Speicher 4 für das Empfangsmuster ausgelesen. Die Wahrscheinlichkeit $P_S$ ist dann im dargestellten Zahlenbeispiel

$$P_S = \frac{54}{254+54} = 18\%.$$

Je nachdem wie die Zählerstände zuvor gebildet wurden, sagt $P_S$ aus, wie groß die Wahrscheinlichkeit ist, dass ein Datenpaket 9 erfolgreich empfangen wird oder wie groß die Wahrscheinlichkeit ist, dass n Datenpakete oder mehr im vorausliegenden Zeitintervall erfolgreich empfangen werden.

## Patentansprüche

1. Verfahren zur Schätzung einer zu erwartenden Empfangsqualität in einem Zeitintervall ($\Delta t2$) für eine Car to X, C2X, Kommunikation mittels eines Speichers (4), wobei in dem Speicher (4) zu binären Empfangsmustern, EM, von Datenpaketen (6) in einem ersten Zeitintervall ($\Delta t1$) mindestens eine empirisch ermittelte Größe abgelegt ist, die angibt oder aus der ermittelbar ist, wie groß die Wahrscheinlichkeit, $P_s$, ist, dass in einem nachfolgenden zweiten Zeitintervall ($\Delta t2$) ein Datenpaket (9) oder n Datenpakete (9) erfolgreich empfangen werden, wobei das binäre Empfangsmuster, EM, eine logische 1 für ein erfolgreich empfangenes Datenpaket (6) und eine logische 0 für ein nicht erfolgreich empfangenes Datenpaket aufweist, wobei für ein erstes Zeitintervall ($\Delta t1$) vor dem Zeitintervall das binäre Empfangsmuster, EM, bestimmt und die zugehörige Größe für die Wahrscheinlichkeit, $P_s$, für das Zeitintervall ($\Delta t2$) aus dem Speicher (4) ausgelesen wird, wobei in Abhängigkeit der Wahrscheinlichkeit, $P_s$, eine Warnmeldung generiert wird und/oder ein Übertragungsparameter und/oder eine Funktionalität einer Fahrerassistenzfunktion verändert wird.

2. Verfahren nach Anspruch 1, **dadurch gekennzeichnet, dass** die Anzahl der erfolgreich empfangenen Datenpakete (9) und/oder nicht erfolgreich empfangenen Datenpakete (9) in dem Zeitintervall ($\Delta t2$) erfasst werden, wobei die Größe oder die Wahrscheinlichkeit ($P_S$) für das binäre Empfangsmuster, EM, in dem Speicher (4) aufgrund der erfassten Empfangsqualität aktualisiert wird.

3. Verfahren nach Anspruch 1 oder 2, **dadurch gekennzeichnet, dass** in dem Speicher (4) zu jedem binären Empfangsmuster, EM, zwei Zählerstände (7, 8) existieren, wobei der eine Zählerstand (7) inkrementiert wird, wenn n oder mehr Datenpakete (9) im Zeitintervall ($\Delta t2$) erfolgreich empfangen wurden und der andere Zählerstand (8) inkrementiert wird, wenn weniger als n Datenpakete (9) im Zeitintervall ($\Delta t2$) erfolgreich empfangen wurden, oder der eine Zählerstand (7) inkrementiert wird, wenn jeweils ein Datenpaket (9) erfolgreich empfangen wurde und der andere Zählerstand (8) inkrementiert wird, wenn jeweils ein Datenpaket (9) nicht erfolgreich empfangen wurde.

4. Verfahren nach einem der vorangegangenen Ansprüche, **dadurch gekennzeichnet, dass** das erste Zeitintervall ($\Delta t1$) ein Vielfaches größer als das zweite Zeitintervall ($\Delta t2$) gewählt wird.

5. Verfahren nach einem der vorangegangenen Ansprüche, **dadurch gekennzeichnet, dass** in dem Speicher (4) für die binären Empfangsmuster, EM, in Abhängigkeit von mindestens einem weiteren Parameter eine zugehörige Größe oder Wahrscheinlichkeit, $P_s$, abgelegt ist, wobei die zugehörige Größe oder Wahrscheinlichkeit, $P_s$, automatisch in Abhängigkeit des weiteren Parameters ausgewählt wird oder der weitere Parameter manuell ausgewählt wird.

6. Vorrichtung (1) zur Schätzung einer zu erwartenden Empfangsqualität in einem Zeitintervall ($\Delta t2$) für eine Car to X, C2X, Kommunikation, umfassend eine Empfangseinrichtung (2) zur Erfassung von Datenpaketen (6, 9) und einem Speicher (4), wobei in dem Speicher (4) zu binären Empfangsmustern, EM, von Datenpaketen (6) in einem ersten Zeitintervall ($\Delta t1$) mindestens eine empirisch ermittelte Größe abgelegt ist, die angibt oder aus der ermittelbar ist, wie groß die Wahrscheinlichkeit, $P_s$, ist, dass in einem nachfolgenden zweiten Zeitintervall ($\Delta t2$) ein Datenpaket (9) oder n Datenpakete (9) erfolgreich empfangen werden, wobei das binäre Empfangsmuster, EM, eine logische 1 für ein erfolgreich empfangenes Datenpaket (6) und eine logische 0 für ein nicht erfolgreich empfangenes Datenpaket aufweist, wobei die Vorrichtung (1) derart ausgebildet ist, dass für ein erstes Zeitintervall ($\Delta t1$) vor dem Zeitintervall ($\Delta t2$) das binäre Empfangsmuster, EM, bestimmt und die zugehörige Größe für die Wahrscheinlichkeit, $P_s$, für das Zeitintervall ($\Delta t2$) aus dem Speicher (4) ausgelesen wird, wobei in Abhängigkeit der Wahrscheinlichkeit, $P_s$, eine Warnmeldung generiert und/oder ein Übertragungsparameter und/oder eine Funktionalität einer Fahrerassistenzfunktion verändert wird.

7. Vorrichtung nach Anspruch 6, **dadurch gekennzeichnet, dass** die Vorrichtung (1) derart ausgebildet ist, dass die Anzahl der erfolgreich empfangenen Datenpakete (9) und/oder nicht erfolgreich empfangenen Datenpakete (9) in dem Zeitintervall ($\Delta t2$) erfasst werden, wobei die Größe oder die Wahrscheinlichkeit, $P_s$, in dem Speicher (4) für das binäre Empfangsmuster, EM, aufgrund der erfassten Empfangsqualität aktualisiert wird.

8. Vorrichtung nach einem der Ansprüche 6 oder 7, **dadurch gekennzeichnet, dass** die Vorrichtung (1) derart ausgebildet ist, dass in dem Speicher (4) zu jedem binären Empfangsmuster, EM, zwei Zählerstände (7, 8) existieren, wobei der eine Zählerstand (7) inkrementiert wird, wenn n oder mehr Datenpakete (9) im Zeitintervall ($\Delta t2$) erfolgreich empfangen wurden und der andere Zählerstand (8) inkrementiert wird, wenn weniger als n Datenpakete (9) im Zeitintervall ($\Delta t2$) erfolgreich empfangen wurden, oder der eine Zählerstand (7) inkrementiert wird, wenn jeweils ein Datenpaket (9) erfolgreich empfangen wurde und der andere Zählerstand (8) inkrementiert wird, wenn jeweils ein Datenpaket (9) nicht erfolgreich empfangen wurde.

9. Vorrichtung nach einem der Ansprüche 6 bis 8, **dadurch gekennzeichnet, dass** das erste Zeitintervall ($\Delta t1$) ein Vielfaches größer als das zweite Zeitintervall ($\Delta t2$) ist.

10. Vorrichtung nach einem der Ansprüche 6 bis 9, **dadurch gekennzeichnet, dass** in dem Speicher (4) für die binären Empfangsmuster, EM, in Abhängigkeit von mindestens einem weiteren Parameter eine zugehörige Größe oder Wahrscheinlichkeit, $P_s$, abgelegt ist, wobei die Vorrichtung (1) derart ausgebildet ist, dass die zugehörige Größe oder Wahrscheinlichkeit, $P_s$, automatisch in Abhängigkeit des Parameters ausgewählt wird oder der Parameter manuell ausgewählt wird.

**Claims**

1. A method for estimating an expected reception quality in a time interval ($\Delta t2$) for a Car-to-X, C2X, communication by means of a memory (4), wherein in the memory (4) for binary reception patterns, EM, of data packages (6) in a first time interval ($\Delta t1$) at least one empirically determined value is stored, that indicates or from which it can be determined how great the probability, $P_s$, is that in a subsequent second time interval ($\Delta t2$) a data package (9) or n data packages (9) are received successfully, wherein the binary reception pattern, EM, has a logic 1 for a successfully received data package (6) and has a logic 0 for an unsuccessfully received data package, wherein for a first time interval ($\Delta t1$) before the time interval the binary reception pattern, EM, is determined and the corresponding value for the probability, $P_s$, for the time interval ($\Delta t2$) is read from the memory (4), wherein depending on the probability, $P_s$, a warning message is generated and/or a transmission parameter and/or a functionality of a driver assistance function are changed.

2. The method according to claim 1, **characterized in that** the number of successfully received data packages (9) and/or unsuccessfully received data packages (9) are acquired in the time interval ($\Delta t2$), wherein the value or the probability ($P_s$) for the binary reception pattern, EM, is updated in the memory (4) on the basis of the acquired reception quality.

3. The method according to claim 1 or 2, **characterized in that** in the memory (4) for each binary reception pattern, EM, two counter readings (7, 8) exist, wherein the one counter reading (7) is increased if n or more data packages (9) were received successfully in the time interval ($\Delta t2$) and the other counter reading (8) is increased if fewer than n data packages (9) were received successfully in the time interval ($\Delta t2$), or the one counter reading (7) is increased if a respective data package (9) was received successfully and the other counter reading (8) is increased if a respective data package (9) was received unsuccessfully.

4. The method according to any one of the preceding claims, **characterized in that** the first time interval ($\Delta t1$) is selected many times greater than the second time interval ($\Delta t2$).

5. The method according to any one of the preceding claims, **characterized in that** in the memory (4) for the binary reception patterns, EM, depending on at least one further parameter a corresponding value or probability, $P_s$, is stored, wherein the corresponding value or probability, $P_s$, is selected automatically depending on the further parameter or the further parameter is selected manually.

6. An apparatus (1) for estimating an expected reception quality in a time interval ($\Delta t2$) for a Car-to-X, C2X, communication, comprising a reception device (2) for acquiring data packages (6, 9) and a memory (4), wherein in the memory (4) for binary reception patterns, EM, of data packages (6) in a first time interval ($\Delta t1$) at least one empirically determined value is stored, that indicates or from which it can be determined how great the probability, $P_s$, is that in a subsequent second time interval ($\Delta t2$) a data package (9) or n data packages (9) are received successfully, wherein the binary reception pattern, EM, has a logic 1 for a successfully received data package (6) and a logic 0 for an unsuccessfully received data package, wherein the apparatus (1) is so configured that for a first time interval ($\Delta t1$) before the time interval ($\Delta t2$) the binary reception pattern, EM, is determined and the corresponding value for the probability, $P_s$, for the time interval ($\Delta t2$) is read from the memory (4), wherein depending on the probability,

$P_s$, a warning message is generated and/or a transmission parameter and/or a functionality of a driver assistance function are changed.

7. The apparatus according to claim 6, **characterized in that** the apparatus (1) is so configured that the number of successfully received data packages (9) and/or unsuccessfully received data packages (9) in the time interval ($\Delta t2$) are acquired, wherein the value or the probability, $P_s$, in the memory (4) for the binary reception pattern, EM, is updated on the basis of the acquired reception quality.

8. The apparatus according to one of claims 6 or 7, **characterized in that** the apparatus (1) is so configured that in the memory (4) for each binary reception pattern, EM, two counter readings (7, 8) exist, wherein the one counter reading (7) is increased if n or more data packages (9) were received successfully in the time interval ($\Delta t2$) and the other counter reading (8) is increased if fewer than n data packages (9) were received successfully in the time interval ($\Delta t2$), or the one counter reading (7) is increased if a respective data package (9) was received successfully and the other counter reading (8) is increased if a respective data package (9) was received unsuccessfully.

9. The apparatus according to any one of claims 6 to 8, **characterized in that** the first time interval ($\Delta t1$) is many times greater than the second time interval ($\Delta t2$).

10. The apparatus according to any one of claims 6 to 9, **characterized in that** in the memory (4) for the binary reception patterns, EM, depending on at least one further parameter a corresponding value or probability, $P_s$, is stored, wherein the apparatus (1) is so configured that the corresponding value or probability, $P_s$, is selected automatically depending on the parameter or the parameter is selected manually.

**Revendications**

1. Procédé d'estimation d'une qualité de réception attendue dans un intervalle de temps ($\Delta t2$) pour une communication Car-to-X, C2X, au moyen d'une mémoire (4), dans lequel dans la mémoire (4) destinée à des modèles de réception binaire, EM, de paquets de données (6) dans un premier intervalle de temps ($\Delta t1$) est stockée au moins une grandeur déterminée empiriquement, qui indique ou de laquelle il est possible de déterminer quelle est la probabilité, $P_s$, que dans un second intervalle de temps ($\Delta t2$) successif, un paquet de données (9) ou n paquets de données (9) soient bien reçus, dans lequel le modèle de réception binaire, EM, comporte un 1 logique pour un paquet de données (6) bien reçu et un 0 logique pour un paquet de données n'ayant pas été bien reçu, dans lequel pour un premier intervalle de temps ($\Delta t1$), avant l'intervalle de temps, le modèle de réception binaire, EM, est déterminé et la grandeur correspondante de probabilité, $P_s$, pour l'intervalle de temps ($\Delta t2$) est lue à partir de la mémoire (4), dans lequel, en fonction de la probabilité, $P_s$, un message d'alarme est généré et/ou un paramètre de transmission et/ou une fonctionnalité d'une fonction d'assistance au conducteur sont modifiés.

2. Procédé selon la revendication 1, **caractérisé en ce que** le nombre de paquets de données (9) bien reçus et/ou de paquets de données (9) n'ayant pas été bien reçus sont acquis dans l'intervalle de temps ($\Delta t2$), dans lequel la grandeur ou la probabilité ($P_s$) pour le modèle de réception binaire, EM, est mise à jour dans la mémoire (4) sur la base de la qualité de réception acquise.

3. Procédé selon la revendication 1 ou 2, **caractérisé en ce que** dans la mémoire (4) pour chaque modèle de réception binaire, EM, il existe deux lectures de compteur (7, 8), dans lequel l'une lecture de compteur (7) est augmentée si n ou plusieurs paquets de données (9) ont été bien reçus dans l'intervalle de temps ($\Delta t2$) et l'autre lecture de compteur (8) est augmentée si moins de n paquets de données (9) ont été bien reçus dans l'intervalle de temps ($\Delta t2$), ou l'une lecture de compteur (7) est augmentée si un paquet de données (9) respectif a été bien reçu et l'autre lecture de compteur (8) est augmentée si un paquet de données (9) respectif n'a pas été bien reçu.

4. Procédé selon l'une quelconque des revendications précédentes, **caractérisé en ce que** le premier intervalle de temps ($\Delta t1$) est sélectionné bien plus grand que le second intervalle de temps ($\Delta t2$).

5. Procédé selon l'une quelconque des revendications précédentes, **caractérisé en ce que** dans la mémoire (4) pour les modèles de réception binaire, EM, en fonction d'au moins un paramètre supplémentaire, une grandeur correspondante ou probabilité, $P_s$, est stockée, dans lequel la grandeur correspondante ou probabilité, $P_s$, est sélectionnée automatiquement en fonction du paramètre supplémentaire ou le paramètre supplémentaire est sélectionné manuellement.

6. Dispositif (1) d'estimation d'une qualité de réception attendue dans un intervalle de temps ($\Delta t2$) pour une communication Car-to-X, C2X, comprenant un appareil de réception (2) pour acquérir des paquets de données (6, 9) et une mémoire (4), dans lequel dans la mémoire (4) destinée à des modèles de réception binaire, EM, de paquets de données (6) dans un premier intervalle de temps ($\Delta t1$) est stockée au moins une grandeur déterminée empiriquement, qui indique ou de laquelle il est possible de déterminer quelle est la probabilité, $P_s$, que dans un second intervalle de temps ($\Delta t2$) successif, un paquet de données (9) ou n paquets de données (9) soient bien reçus, dans lequel le modèle de réception binaire, EM, comporte un 1 logique pour un paquet de données (6) bien reçu et un 0 logique pour un paquet de données n'ayant pas été bien reçu, dans lequel le dispositif (1) est configuré de telle manière que pour un premier intervalle de temps ($\Delta t1$), avant l'intervalle de temps ($\Delta t2$), le modèle de réception binaire, EM, est déterminé et la grandeur correspondante de probabilité, $P_s$, pour l'intervalle de temps ($\Delta t2$) est lue à partir de la mémoire (4), dans lequel, en fonction de la probabilité, $P_s$, un message d'alarme est généré et/ou un paramètre de transmission et/ou une fonctionnalité d'une fonction d'assistance au conducteur sont modifiés.

**7.** Dispositif selon la revendication 6, **caractérisé en ce que** le dispositif (1) est configuré de telle manière que le nombre de paquets de données (9) bien reçus et/ou de paquets de données (9) n'ayant pas été bien reçus sont acquis dans l'intervalle de temps ($\Delta t2$), dans lequel la grandeur ou la probabilité, $P_s$, dans la mémoire (4) pour le modèle de réception binaire, EM, est mise à jour sur la base de la qualité de réception acquise.

**8.** Dispositif selon l'une des revendications 6 ou 7, **caractérisé en ce que** le dispositif (1) est configuré de telle manière que dans la mémoire (4) pour chaque modèle de réception binaire, EM, il existe deux lectures de compteur (7, 8), dans lequel l'une lecture de compteur (7) est augmentée si n ou plusieurs paquets de données (9) ont été bien reçus dans l'intervalle de temps ($\Delta t2$) et l'autre lecture de compteur (8) est augmentée si moins de n paquets de données (9) ont été bien reçus dans l'intervalle de temps ($\Delta t2$), ou l'une lecture de compteur (7) est augmentée si un paquet de données (9) respectif a été bien reçu et l'autre lecture de compteur (8) est augmentée si un paquet de données (9) respectif n'a pas été bien reçu.

**9.** Dispositif selon l'une quelconque des revendications de 6 à 8, **caractérisé en ce que** le premier intervalle de temps ($\Delta t1$) est bien plus grand que le second intervalle de temps ($\Delta t2$).

**10.** Dispositif selon l'une quelconque des revendications de 6 à 9, **caractérisé en ce que** dans la mémoire (4) pour les modèles de réception binaire, EM, en fonction d'au moins un paramètre supplémentaire, une grandeur correspondante ou probabilité, $P_s$, est stockée, dans lequel le dispositif (1) est configuré de telle manière que la grandeur correspondante ou probabilité, $P_s$, est sélectionnée automatiquement en fonction du paramètre ou le paramètre est sélectionné manuellement.

FIG. 1

FIG. 2

EM — 011000010010010 ⟩ 423 ⟩ 25

8

7

EM — 111010100011111 ⟩ 5 ⟩ 101

7

8

...

EM — 010111110010010 ⟩ 34 ⟩ 3

8

7

8

7

4

## FIG. 3

101110110001101 ⟩ Ps?

EM

254 ⟩ 54

8

7

4

Ps=18%

## FIG. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 202011011487 A1
- US 7355997 B2

- DE 102009054795 A1

**In der Beschreibung aufgeführte Nicht-Patentliteratur**

- **GIETELINK O. J. et al.** A probabilistic approach for validation of advanced driver assistance systems. *Transportation Research Record, Transportation Research Board,* 01. November 2004, ISSN 0361-1981, 1-18